# EUROPEAN PATENT SPECIFICATION

(11) **EP 0 567 451 B1**
(45) Date of publication and mention of the grant of the patent: **12.06.1996**
(21) Application number: 90917080.5
(22) Date of filing: 13.11.1990
(51) Int. Cl.: F02B 53/06, F02D 9/14

(54) **INDUCTION SYSTEM FOR ROTARY ENGINES, 2-STROKE AND OTHER ENGINES WITHOUT VALVES, WITH TRANSLATING THROTTLE SHUTTERS**
EINLASSSYSTEM FÜR ROTATIONSKOLBEN-BRENNKRAFTMASCHINEN, ZWEITAKTMOTOREN UND ANDERE BRENNKRAFTMASCHINEN OHNE VENTILE, MIT VERSCHIEBBAREN DROSSELKLAPPEN
SYSTEME D'INDUCTION POUR MOTEURS ROTATIFS, MOTEURS DEUX TEMPS ET AUTRES MOTEURS SANS SOUPAPE, DOTE DE VOLETS D'ETRANGLEUR A TRANSLATION

(43) Date of publication of application: 03.11.1993
(73) Proprietor: DECLERCQ, Paul Eugène Alois, D-88239 Wangen (DE)
(72) Inventor: DECLERCQ, Paul Eugène Alois, D-88239 Wangen (DE)
(86) International application number: EP9001951
(87) International publication number: WO9201148

(56) References cited:
- FR-A- 2 225 621
- FR-A- 2 260 694
- FR-A- 2 487 003
- US-A- 4 474 006

## Description

The invention relates to an induction system for rotary engines and internal combustion engines without valves (see Document FR-A-2260694 or FR-A-2487003).

### 1. OBJECTIVES

### 1.1. TURBULENCE IN THE AIR-FUEL MIXTURE FLOW.

This induction system is designed to produce turbulence in the inlet flow (air or air-fuel mixture), caused by the sharp cross-section cut-off of the inlet channels by the translating (horizontally, vertically, or diagonally) throttle shutters.

This design allows positioning of the throttle valves as close as possible to the combustion room, which maintains a maximum of the originated turbulence into the combustion space.

The effect of this concept can be compared to the favourable effect of the piston engine valves on creating of turbulence in the air-fuel flow, and on the thorough mixing of fuel and air.

This induction system thus reduces the slight thermodynamic efficiency deficit of the rotary engine, compared to the piston engine.

### 1.2. FREEDOM OF DESIGN OF THE INLET DUCTING

This design aims for a maximum of freedom in inlet header configuration, which in turn allows for optimum ram-runing.

The shape of the air channels between the airflow sensor of the injection system, and the engine with the translating throttle shutter system slicked right against it, is totally free.

Even telescopic headers, adapting lenght to engine rev, or headers with variable cross section can be used with this induction system.

The most fancy plenum-shapes are allowed.

### 2. FEATURES

### 2.1. SIMPLICITY, EASE AND ECONOMY OF PRODUCTION

This induction system is a sandwich construction of extreme simplicity.

### The configuration is modular.

Components are either mass produced items(small roller bearings, airpot pneumatic cylinders f.i., alu P40 & P60 threaded studs & nuts & washers), or easily produced parts (machined from Alu-alloy or other plate for small series, or Alu-alloy, Zamac or other precision cast, or precision formed in polymer for big series).

Several alternative translating mechanims can be adopted: linear bearings, miniature load transfer balls, air cushion, etc.

The sealing & actuating cylinders can be either pneumatic or hydraulic. They may even be replaced by a seal on the actuating rod, and a small frame supporting the actuating wire force.

Adding a seal on the actuating rod, the cylinders can be actuated both ways.

### 2.2. EASE OF MOUNTING, REPAIR, DISMANTLING, AND ENGINE INSPECTION.

The system is sandwiched by threaded studs against a solid back-plate which closes the engine cooling circuit watertight.

All the superposed components can easily be dismantled (without draining the engine coolant), to allow visual inspection of the rotor apex seals, or segments, f.i.

The induction system itself is maintenance free and seldom or never needs inspection.

In case of an accident (by an exterior impact) only the damaged components need to be changed.

### 2.3. INCREASED POWER OUTPUT, EXCELLENT IDLE RUNNING.

Power output at all revs is superior to conventional carburetor or injection induction systems.

Throttle response is instant.

Idle running is perfectly stable at 800 RPM.

Idle air adjustment is very concise.

### 3. DESCRIPTION

See the drawings which show one possible way to produce
the invention INDUCTION SYSTEM FOR ROTARY ENGINES, WITH TRANSLATING THROTTLE SHUTTERS.
01. SAMPLE ASSEMBLY ON MAZDA 12 A ENGINE.
02. SHUTTER VALVE FOR 1^{ARY} INLETS.
03. SHUTTER VALVE FOR 2^{ARY} INLETS.
04. INDUCTION SYSTEM BACK PLATE-DETAILS.

The primary inlet shutter, common to the two rotors, is opened first to feed the air-fuel mixture at low revs and power.

Its actuation is direct by a steel wire connected to the throttle pedal (via a throttle box eventually) or to an electric actuator controlled by the engine computer, or through engine computer applied vacuum.

The secondary inlets open when the flow through the primary becomes insufficient with respect to the power demand.

Their control is either direct through wire operation, from a cable lever arrangement, or through wire or vacuum operation, engine computer controlled, or automatic, through venturi vacuum at the primary inlets, connected to the space over the secondary pneumatic cylinder pistons.

In this case, the pneumatic cylinder size (φ) and snubber spring force are selected to optimise the engine's operation.

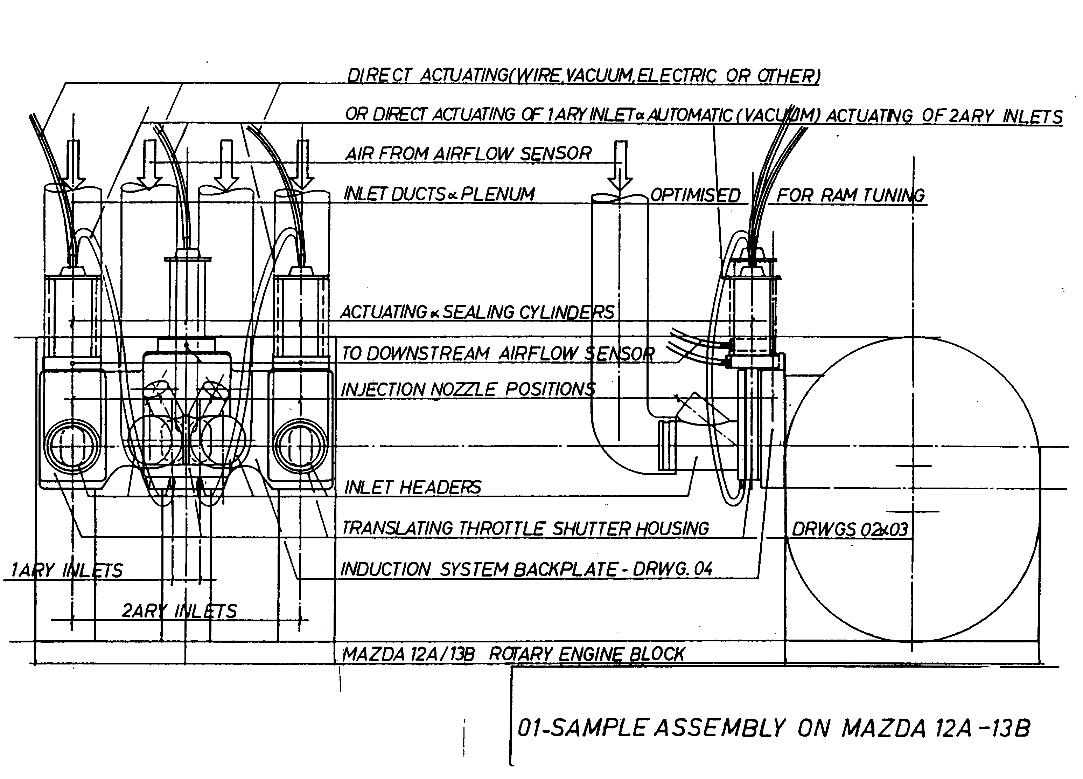

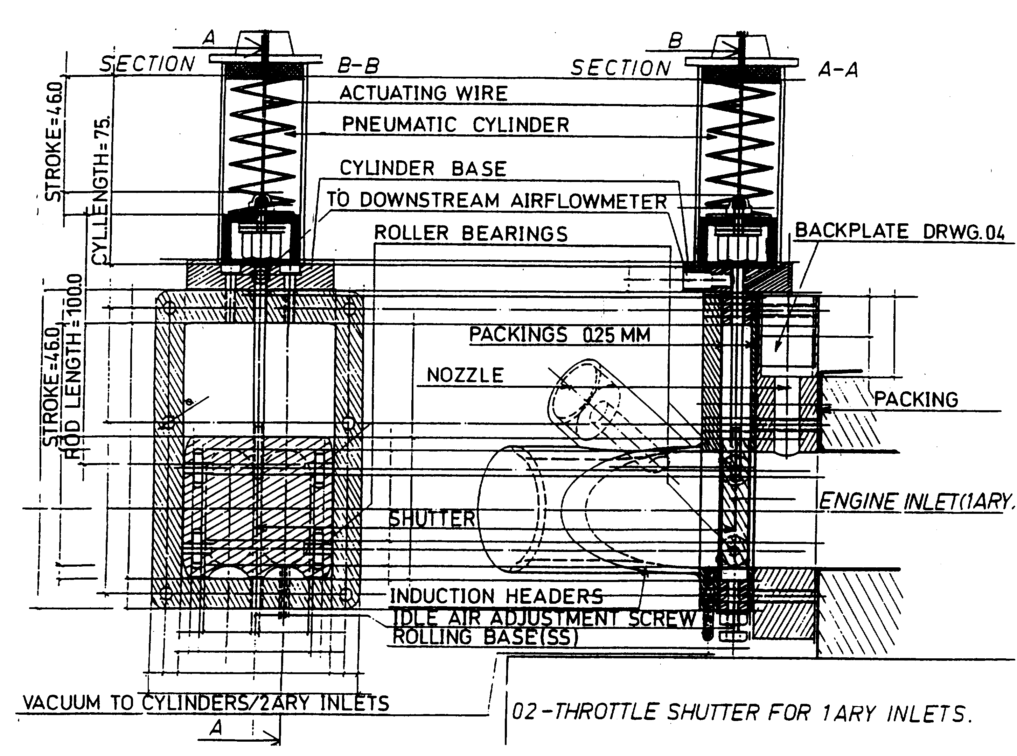

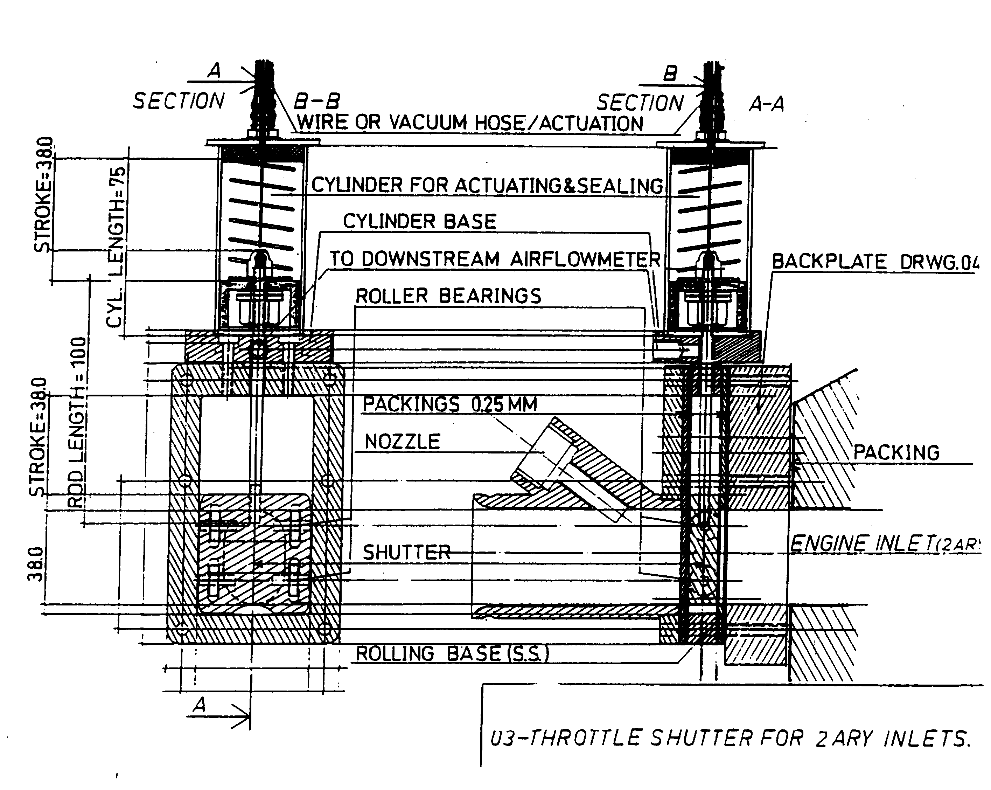

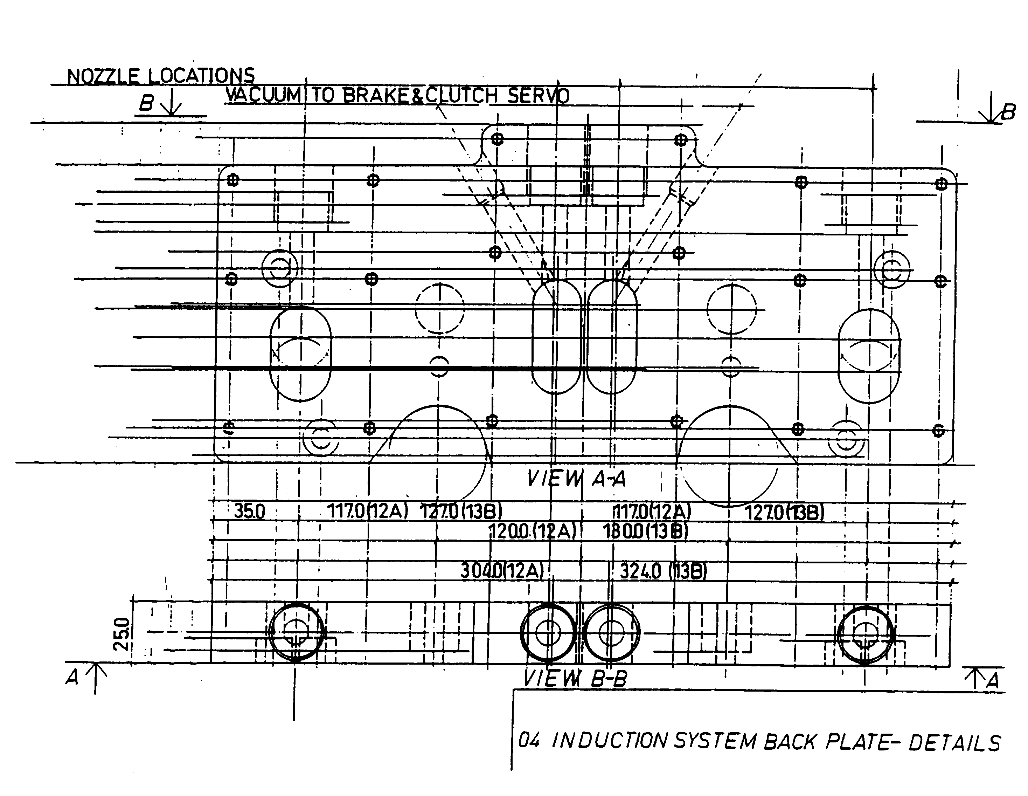

## Claims

1. An induction system for rotary engines and internal combustion engines without valves, having a plurality of intake passages feeding each chamber and a throttle shutter assembly comprising ;
- (a)back plate(s) having openings for the intake ports of the engine,
- each opening being closed by a shutter,
- said shutter translating across the opening(s) within a housing to move progressively between a first position in which the openings are almost closed and a second position in which the openings are open, there being a small gap between the downstream face of the translating shutter and the front face of the rolling base,
- the housing(s) being attached between the backplate(s) and the intake passages having a clearance space therein within which the shutter moves friction free,
- actuator(s) moving the shutter(s) within the housing(s),
- the actuator(s), housing(s) and backplate(s) together forming sealed unit(s) containing the shutter(s) so that only an intake charge from the air intake enters the engine,
- the throttle shutter assembly being positioned as close as possible to the combustion room so that turbulence of the inlet flow caused by the throttle shutter extends into the combustion room.

2. An induction system according to claim 1 in which more than one intake port is closed by a single shutter.

3. An induction system according to any preceding claim in which the clearance space in the housing is connected to the air intake downstream of an air flow meter.

4. An induction system according to any preceding claim having an individual control for primary, secondary and further intake ports.

5. An induction system according to claim 4 in which the secondary inlets are actuated by a vacuum from the primary inlets.

## Patentansprüche

1. Ladungssystem für Kreiskolbenmotoren, und interne Brennkraftmaschinen ohne Ventile, zusammengesetzt von Induktionskanälen die die Verbrennungsraumen speisen, und verschiebende Drosselklappensatze, bestehend aus :
- ein Trägerplatte, im welche Öffnungen anschliessen an die Einlasstören des Motors,
- diese Öffnungen abgeblendet von einem verschiebende Drosselklappe,
- besagte Klappe progressiv fahrend vor die Öffnungen, innerhalb eines Gehauses, zwischen ein Position wobei die Öffnungen abgeblendet sind, und ein Position wobei die Öffnungen frei sind, mit ein Spiel zwischen die stromabwärtse Seite der Klappe und der Fahrbahn, das Spiel der interne Seiten des Gehauses gegenüber die Klappe ein reibungsfreie Bewegung erlaubend,
- der Betätiger welche der Drosselklappe innerhalb des Gehauses bewegt,
- Betätiger, Gehause, und Trägerplatte ein gasdichte Module zusammensetzend, sodass nur die Ladung welche von der Lufteinnahme stammt der Motor einfliesst,
- die Drosselklappensatze so nähe wie moglich zu den Verbrennungsraumen positioniert, sodass der Turbulenz, vom Schieberklappe erregt, bis ins Verbrennungsraum beibehalten bleibt.

2. Ladungssystem nach Anspruch 1, in dem mehrere Einlasstören vom einem schiebende Drosselklappe bedient werden.

3. Ladungssystem nach Anspruch 1 oder 2, in welchem der Freiraum im Gehause mit der Lufteinnahme verbunden ist, stromabwärts des Luftmengenmessers.

4. Ladungssystem nach einem oder mehreren der Anspruche 1 bis 3 , mit einer individuellen Kontrolle für die primären, sekundären, und weitere tören.

5. Ladungssystem nach einem oder mehreren der Anspruche 1 bis 4, in welchem die Drosselklappe der sekundäre Toren betätigt werden von Unterdrück aus den primären Induktionskanäle .

## Revendications

1. Système d'induction pour moteurs rotatifs et moteurs à combustion interne sans soupapes, ayant un nombre de tuyères d'induction alimentant chaque chambre; et un ensemble de volets étrangleurs comportants
- une plaque support dans laquelle des ouvertures se raccordent aux portes d'alimentation du moteur,
- les ouvertures étant masquées par un volet étrangleur à translation,
- le volet en question translatant devant l'(les) ouverture(s), à l'intérieur d'un boîtier, se déplaçant progressivement entre une position dans laquelle l'(les) ouverture(s) est(sont) masquée(s) et une position dans laquelle l'(les) ouverture(s) est(sont) exposée(s), avec un jeu entre la face aval du volet et la face opposée du chemin de roulement,
- les faces intérieures du boîtier ayant un jeu par rapport au volet étrangleur, grâce auquel la translation du volet est exempte de friction,
- un actuateur qui commande la translation du volet à l'intérieur du boîtier,
- l'actuateur, le boîtier et la plaque support formant une unité étanche, de sorte que seule la charge provenant de la prise d'air entre dans le moteur, l'ensemble des volets étrangleurs étant rapprochés le plus possible de la chambre de combustion, de sorte que la turbulence, créée par le volet, persiste jusque dans la chambre de combustion.

2. Système d'induction selon revendication 1, dans lequel plusieures portes d'induction sont desservies par un seul volet étrangleur.

3. Système d'induction selon revendications 1 ou 2, dans lequel l'espace libre à l'intérieur du boîtier est raccordé à la prise d'air, en aval du débitmètre d'air.

4. Système d'induction selon l'une quelconque des revendications précédentes, ayant un contrôle individuel des portes primaires, secondaires, et suivantes.

5. Système d'induction selon l'une quelconque des revendications précédentes, dans lequel les volets desservant les portes secondaires sont actionnés par la dépression régnant dans les tuyères des portes primaires.
